# EUROPEAN PATENT SPECIFICATION

(11) **EP 0 670 132 B1**
(45) Date of publication and mention of the grant of the patent: **16.09.1998**
(21) Application number: 95870034.6
(22) Date of filing: 11.04.1995
(51) Int. Cl.: A47F 10/02, A47F 1/10, G07F 7/00, G07F 1/00, B65G 1/137

(54) **Device for providing packs of cigarettes to a cash desk**
Vorrichtung zur Bevorratung von Zigarettenpackungen in einer Warenabrechnungsablage
Dispositif pour l'approvisionnement de paquets de cigarettes à une caisse de sortie

(43) Date of publication of application: 06.09.1995
(73) Proprietor: Vanderdonckt, Paul Edmond André Julien, B-9600 Ronse (BE)
(72) Inventor: Vanderdonckt, Paul Edmond André Julien, B-9600 Ronse (BE)
(74) Representative: Claeys, Pierre

(56) References cited:
- EP-A- 0 508 708
- EP-A- 0 599 164
- US-A- 5 215 213

## Description

The present invention relates to a device for providing packs of cigarettes or other tobacco products of different types to a plurality of cash desks in a supermarket, which device comprises a central storage space for storing said packs, means displayed at said cash desks for making a selection amongst said types of packs and means comprising a transport system for supplying a pack of the selected type from said central storage space to said cash desks.

Such a device is disclosed in US-A-5,215,213. This known device comprises a central storage compartment, mounted to the ceiling of a supermarket above the cash desks, and means for supplying packs of cigarettes from this compartment, through respective chutes, to the cash desks.

By using a central storage compartment or space, it is possible to reduce the minimum stock of cigarettes or other tobacco products required in a supermarket. Indeed, supermarkets comprise several cash desks which are not used all the time but each of which had nevertheless to be provided with its own stock of the different types of tobacco products. Due to the fact that tobacco products are rather expensive, such a large stock involved high investment costs. These costs can thus be reduced by means of the device according to US-A-5,215,213 requiring only one single stock for all the cash desks.

A drawback of the device disclosed in US-A-5,215,213 is, however, that for effectively transferring the packs of cigarettes to the cash desks the central storage compartment has to be mounted to the ceiling of the supermarket. Should the storage compartment be located further away from the cash desks, the waiting times would be too long, especially when packs of cigarettes are ordered simultaneously at several cash desks. In a lot of existing supermarkets, such a large space is however not available above the cash desks so that the device according to US-A-5,215,213 can not be used.

A further drawback of this known device is that when the central storage space has to be restocked, it has to be lowered out of the shell mounted to the ceiling. This can of course not be done during the opening hours without disturbing the consumers. Moreover, the central storage space mounted to the ceiling is difficult to be protected against thefts.

An objet of the present invention is therefore to offer a device for providing packs of cigarettes or other tobacco products to the cash desks in a supermarket, which enables to eliminate the above described drawbacks.

To this end, the device according to the invention is characterized in that said central storage space is arranged outside the area of the cash desks and in that said supply means comprise at least partially a pneumatic transport system and/or comprise intermediate storage devices disposed at said plurality of cash desks for storing packs of a number of said different types at these cash desks.

Since the central storage space is arranged outside the area of the cash desks, the problems of the known device relating to the availability of sufficient space above the cash desks, the possibility of restocking during the opening hours and the possibility of a better protection against thefts are solved in the device according to the invention. Moreover, notwithstanding the distance between the central storage space and the cash desks, unacceptable waiting times are avoided by providing at least partially a pneumatic transport system enabling a high transport speed and/or by providing intermediate storage devices at the cash desks from which the packs stored therein can be readily supplied to the respective cash desk.

The intermediate storage devices may each contain for example three packs of each of the most sold types of cigarettes, i.e. of for example nine so-called "fast-movers". In this way, these types of packs are readily supplied to the cash desk reducing the risk of overloading the transport system and consequently of having to wait too long. Due to the high speed which can be achieved by a pneumatic transport system, intermediate storage devices are, however, not essential when such a pneumatic transport system is used, in particular when such a transport system extends from the central storage space to each of the cash desks.

European patent application No. 0 700 025 having a priority date before the filing date of the present patent but being published only after that date discloses such a pneumatic transport system which extends from a central storage space to the cash desks. However, EP-A-0 700 025 does not disclose sensors for following the packs transported thereby as claimed in claim 1 for the states BE, DE, DK, FR, GB, IT and NL designated in EP-A-0 700 025 and for SE wherein the priority application of EP-A-0 700 025 forms a prior right, nor a pneumatic transport system which does not extend entirely to the cash desks.

In a more particular embodiment of the device according to the invention, said supply means are arranged to fill up said intermediate storage devices when said transport system is supplying packs at a flow rate smaller than a predetermined flow rate.

Since the intermediate storage devices are filled up automatically by the transport system with packs from the central storage space, these devices have to contain only a small amount of packs. Further, the transport system is used more efficiently since it can fill up the intermediate storage devices in particular when no selections are made, or, in other words, this transport system may have a smaller capacity.

In a preferred embodiment of the device according to the invention, said intermediate storage devices are arranged to display the packs stored therein.

Further particularities and advantages of the present invention will become apparent from the following description of a particular embodiment of the device for providing packs of cigarettes or other tobacco products of different types to the cash desks of a supermarket. This description in only given by way of example and is not intended to limit the scope of the invention. The reference numerals relate to the annexed drawing wherein :
Figure 1 shows very schematically a device according to the invention having a central storage space for packs of cigarettes or other tobacco products and a transport system for transporting these packs to a plurality of cash desks;
Figure 2 shows a schematic perspective view of the central storage space shown in figure 1;
Figure 3 shows a detail of the central storage space of figure 2;
Figure 4 shows a cross sectional view according to arrow IV-IV in figure 1;
Figure 5 shows a top plan view according to arrow V in figure 1 with the top of the shown transport tube being removed; and
Figure 6 shows a schematic perspective view of an intermediate storage device of the device shown in figure 1.

In these different figures, the same reference numerals relate to the same or analogous elements.

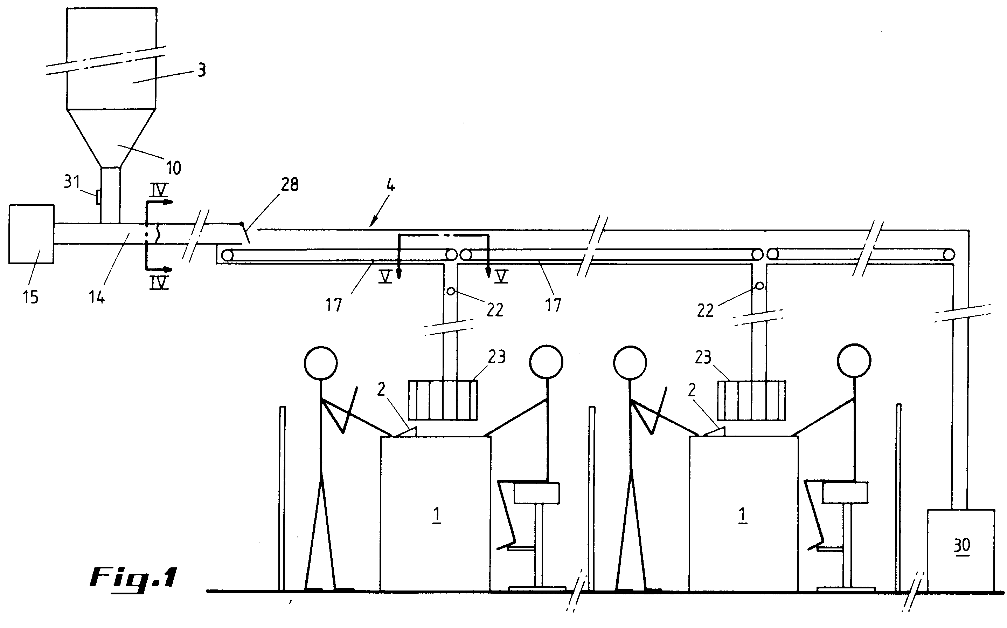

Figure 1 shows a device according to the present invention for providing packs of cigarettes or other tobacco products of different types to a plurality of cash desks 1 in a supermarket. In the further description, reference will only be made to packs of cigarettes but it will be clear that also other types of tobacco products, such as cigars, may be supplied by the device according to the invention.

The device according to the invention comprises first of all means 3 for storing the packs of cigarettes, means 2 displayed at the cash desks 1 for making a selection amongst the different types of packs and means for supplying a pack of the selected type from the storage means to the cash desk 1. The selection means 2 may for example be formed by a kind of keyboard having a picture of each type of pack onto the keys thereof.

In a first aspect of the invention, the storage means comprise a central storage space 3 for storing the packs of cigarettes while the supply means comprise a transport system 4 for transporting the packs from the central storage space 3 to the cash desks 1, more particularly to that cash desk 1 where the selection was made. By using such a central storage space 3, it was found that the stock of cigarettes required for a supermarket can be reduced with about 75 %. It will be clear that this means an important reduction of the capital outlay for such a supermarket.

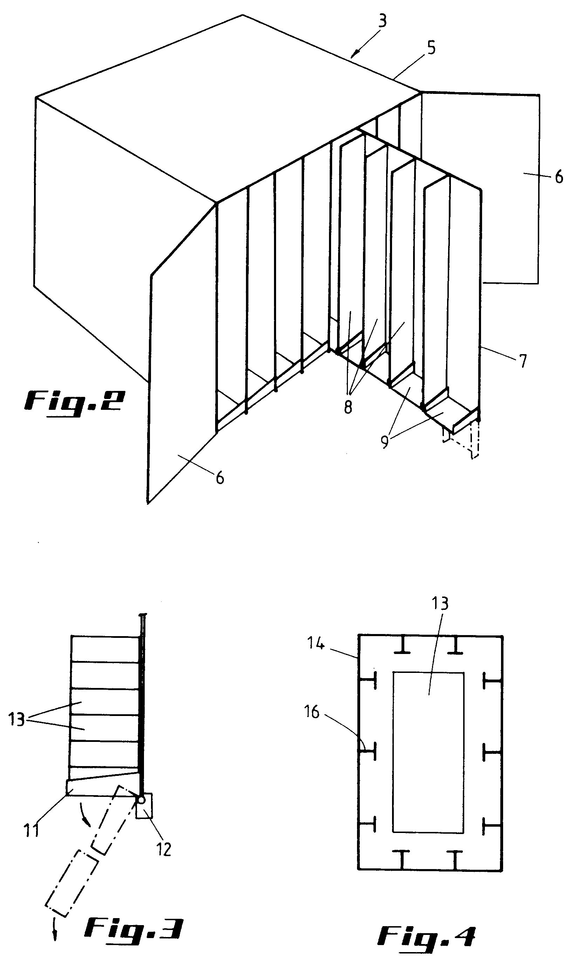

The central storage space 3 of the device according to figure 1 is shown in figure 2. This space 3 is formed by a casing 5 provided with two doors 6. Both the casing 5 and the doors 6 may be made of steel to prevent theft.

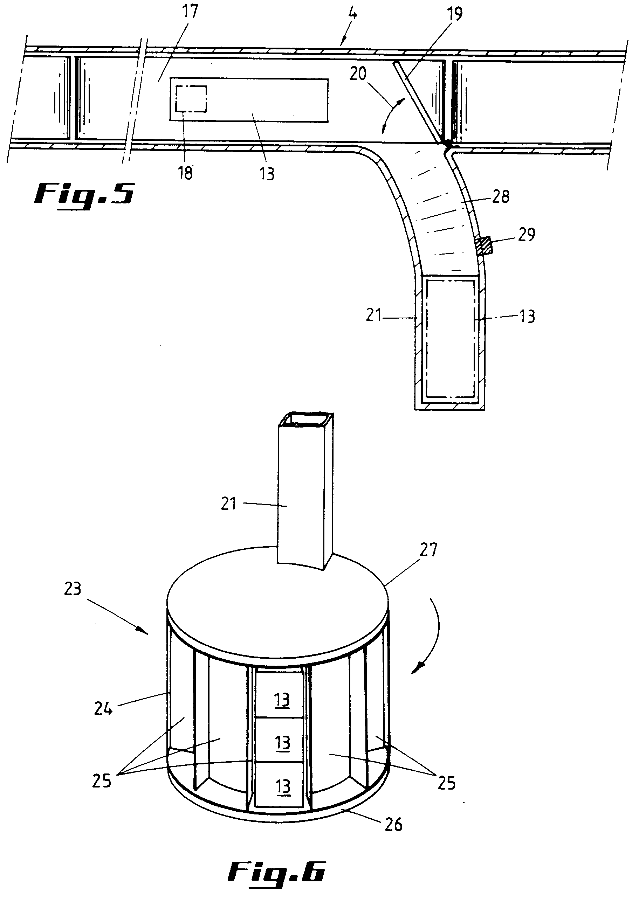

The casing 5 contains for example forty slides or prefilled cassettes 7 each having for example ten columns 8 wherein fifty packs of cigarettes can be stacked one upon the other. Each of these columns 8 is provided underneath with an extractor 9 for ejecting the packs stacked in that column 8 one by one into a funnel shaped space 10 underneath the storage space 3. The extractors 9 are actuated under the control of a central processing unit upon making a selection with one of the selection means 2 located at the cash desks 1 and connected to this central processing unit. Figure 3 shows a schematic view of a possible extractor 9 comprising a valve 11 and an electric motor 12 for pivoting this valve 11 to eject the pack 13 of cigarettes stacked thereon. No further detailed description of such an extractor is given since their general structure is already known per se from the existing cigarette vending machines.

From the funnel shaped space 10 the selected pack 13 falls into a tube 14 wherein it is further pneumatically conveyed to the cash desks 1 by means of an air flow generated in this tube 14 by means of a fan 15. Although use could also be made of other transport systems, such as conveyor belts, the pneumatic transport is preferred, at least for the first part of the transport system, due to the speed which can be achieved and the possibility to provide easily curves in the tubes.

Figure 4 shows a cross section of a preferred embodiment of the pneumatic transport tubes 14. The inner walls of these tubes 14 are provided with inwardly extending longitudinal projections 16 so that the packs fly on a distance from these walls through the tube 14. It has been found that due to the fact that the packs are carried along in this way with the air flow, all of the packs travel at about the same speed, nearly independent of their volume. In order to increase the air flow, a further fan may be provided at the end of the tube 14 to withdraw air therefrom.

At this end of tube 14, a flap 28 is preferably provided to stop the packs 13 so that they fall onto a first conveyor belt 17 conveying the pack 13 further to a first cash desk 1.

Figure 5 shows a top plan view of a part of this first conveyor belt 17 and of a code reader 18 located underneath this conveyor belt 17. In the preferred embodiment shown in figure 5, an automatically readable code, for example a bar code indicating the type of pack, which is provided on each pack will be read through the conveyor belt 17, which is made of a transparent material, before reaching each of the cash desks 1 and this information will be transmitted to the central processing unit. When this type of pack was selected at cash desk 1 by the selection means 1 displayed at this cash desk 1, the central processing unit will activate ejecting means at this latter cash desks 1 to eject the pack 13 of the selected type. As shown in figure 5, the ejecting means may consists of a deflector 19 movable, according to arrow 20, between a rest position parallel to the conveyor belt 17 and the position shown in figure 5 wherein it guides the approaching pack 13 of the conveyor belt, via a downward curved portion 28, into a vertical pipe 21 leading to the cash desk 1. The portion 28 is curved in such a way that a pack 13, which has its side bearing the bar code directed to the conveyor belt 17, is turned with its bottom downward in the pipe 21. This is important when use is made of an intermediate storage device as described hereinafter since in this storage device the packs have to be in the upright position displaying their front face to the customers. In order to close off the curved portion 28 back by means of the deflector 19, an optical eye 29 may be provided for detecting the passage of the pack 13 through the curved portion 28.

Instead of the above described ejecting means, other embodiments of ejecting means can be used such as transversely moveable finger or a short extension of the conveyor belt 17 which can be pivoted downwards into the vertical pipe 21.

When the pack 13 was not of the type selected at the first cash desk 1, the ejecting means 19 are not actuated and the pack moves on to a similar second conveyor belt 17 where the same code reading and actuation procedure is repeated.

Preferably, the transport system is composed between the different cash desks 1 of modular elements extending the transport system from one cash desk to the other, each of these modular elements comprising a conveyor belt 17.

Instead of using conveyor belts between the cash desks 1 it is also possible to convey the packs pneumatically. In this embodiment, which is not shown in the figures, each of the selected packs should preferably be followed by sensors disposed along the path thereof, more particularly between each of the cash desks, so that when the selected pack reaches the cash desk where the selection was made, a valve is opened through which the pack is supplied to that cash desk. In case of pneumatic transport, it is indeed much more difficult to read codes on the packs.

As it appears from Figure 1, a further transport mechanism, in particular a further conveyor belt 17, may be provided at the end of the series of cash desks for conveying packs, which may not have been delivered to one of the cash desks 1, to a container 30. This will be especially the case when the pack 13 was not conveyed in the right position on the conveyor belts 17, i.e. was not positioned with its bar code directed downwards.

In the embodiment shown in the figures, the extractors 9 and the funnel shaped space 10 of the central storage space 3 are designed in such a manner that most of the packs 13 arrive in the desired position in the transport system 4. This position may be verified by means of an additional code reader 31 disposed underneath the funnel shaped space 10. If this additional code reader 31 cannot read the code on the selected pack 13, all of the other code readers 18 will not be able to read the code and the pack 13 will consequently pass all the cash desks and end in the container 30. This information that the pack 13 ejected by an ejector 9 was not read by the additional code reader 31, will be transmitted to the central processing unit which will give another command for ejecting a new pack of the selected type.

In order to prevent thefts of cigarettes, the above described device further preferably comprises means for automatically registering the supply of a pack 13 to a cash desk 1 and for charging it to the client who made the selection, i.e. who ordered the pack of the selected type. Preferably, these registering means are provided for automatically registering the supply of the pack 13 onto a cash register of the cash desk 1 to which the pack is supplied. In this way the pack 13, and the price thereof, will be indicated on the cash ticket.

In the embodiment of figure 1, the registering means comprise a sensor 22 detecting when a pack 13 is supplied through the vertical pipe 21. On the basis of the information received from the code reader 18 and this sensor 22, the central processing unit can provide the necessary information for automatically charging the pack 13 to the client.

This central processing unit can further register all kinds of other information such as the total number of sold articles, the number of articles sold per trade mark, the sold articles per cash desk and per cashier, the amount of the sold articles, the refused selections, adjustments of the selling prices, etc. A modem can also be provided for transferring the necessary information to the wholesaler of tobacco products and to the person responsible for the central storage space.

According to the invention, the supply means of the above described device may further comprise intermediate storage devices 23 disposed at the cash desks 1 for storing for example three packs of a number of said different types at these cash desks, more particularly of the so-called "fast movers". The supply means are arranged to supply a pack from the intermediate storage device 23 upon selection of a type which is stored therein. In this way, these types are readily available at each of the cash desks so that one never has to wait and so that a smaller transport capacity is required without increasing, however, the stock considerably. Indeed, the supply means are preferably arranged to fill up said intermediate storage devices when said transport system is supplying packs at a flow rate smaller than a predetermined flow rate. Consequently, only a few packs of the "fast movers" have to be stored at the cash desk due to this continuous filling up.

Figure 6 shows a possible embodiment of an intermediate storage device 23 according to the invention. This device comprises a rotating drum 24 having on its periphery nine compartments 25 for three packs, which are preferably visible from the outside, and one compartment for allowing packs selected of a type which is not stored in the intermediate storage device to pass and which are therefore supplied through the vertical pipe 21. The compartments 25 are closed off at the bottom by a fixed plate 26 which has an opening underneath the vertical pipe 21. When a pack is selected from the intermediate storage device 23, the drum 24 rotates until the corresponding compartments 25 is situated above this opening and a valve, closing this opening, is opened. For filling the compartments 25, the drum 24 is rotated with the respective compartment under the vertical tube 21, the top of the drum being covered by a fixed plate 27 having an opening for the vertical pipe 21.

With respect to the automatic registering means described hereinabove, it should be noted that these means can also be applied to devices having no central storage space to avoid thefts, also in case such devices are used for providing packs of cigarettes or other tobacco products to a cash desk.

From the above description of some particular embodiments of the device according to the invention, it will be clear that many modifications could be applied thereto without leaving the scope of the present patent application, as defined in the appended claims.

Instead of connecting the different cash desk in series as described hereinabove, the transport system could comprise for example parallel pipes each conveying the packs to one of more of said cash desks. Of course, combinations of arrangements in series and in a parallel are also possible.

## Claims (Claims for the following Contracting State(s): AT, CH, ES, GR, IE, LI, LU, MC, PT)

1. A device for providing packs of cigarettes or other tobacco products of different types to a plurality of cash desks (1) in a supermarket, which device comprises a central storage space (3) for storing said packs, means (2) displayed at said cash desks (1) for making a selection amongst said types of packs and means, comprising a transport system (4), for supplying a pack of the selected type from said central storage space to said cash desks, characterized in that said central storage space is arranged outside the area of the cash desks and in that said supply means comprise at least partially a pneumatic transport system and/or comprise intermediate storage devices (23) disposed at said plurality of cash desks (1) for storing packs of a number of said different types at these cash desks (1).

2. A device according to claim 1, characterized in that said pneumatic transport system extends from the central storage space (3) to each of the cash desks (1)

3. A device according to claim 1 or 2, characterized in that said supply means are arranged to fill up said intermediate storage devices (23) when said transport system (4) is supplying packs at a flow rate smaller than a predetermined flow rate.

4. A device according to any one of the claims 1 to 3, characterized in that said intermediate storage devices (23) are arranged to display the packs stored therein.

5. A device according to any one of the claims 1 to 4, characterized in that said selection means (2) are displayed at said plurality of cash desks (1) and said supply means (4) are arranged to supply a pack of the selected type to the cash desk (1) where the selection was made.

6. A device according to any one of the claims 1 to 5, characterized in that said pneumatic transport system (4) comprises tubes (14) for conveying said packs pneumatically by means of air blown through said tubes, these tubes (14) comprising preferably inwardly directed longitudinal projections (16) to maintain the transported packs (13) a predetermined distance from the inner wall of said tubes (14).

7. A device according to claim 6, characterized in that said transport system (4) comprises sensors disposed along said tubes (14) for following the packs transported by this transport system (4).

8. A device according to any one of the claims 1 to 7, characterized in that said packs are provided with an automatically readable code, indicating said type of packs, and said transport system (4) connects said plurality of cash desks (1) in series and comprises code readers (18) each disposed upstream one of said cash desks (1) and means for actuating ejecting means (19) disposed at the cash desk (1) where the selection was made upon detection by the code reader (18) disposed upstream this latter cash desk of a pack of the selected type.

9. A device according to any one of the claims 1 to 8, characterized in that said transport system (4) comprises modular elements for extending this transport system from one of said plurality of cash desks (1) to the subsequent cash desk (1), said modular elements comprising at least one conveyor belt (17) for conveying said packs along said cask desks, and said transport system (4) preferably comprises tubes (14) for conveying said packs pneumatically from said central storage space (3) to the first one of said conveyor belts (17).

10. A device according to any one of the claims 1 to 9, characterized in that it comprises means for automatically registering the supply of a pack to a cash desk (1) and for charging it to the client.

11. A device according to claim 10, characterized in that said registering means are provided for automatically registering the supply of said pack onto a cash register of the cash desk (1) to which the pack is supplied.

## Claims (Claims for the following Contracting State(s): BE, DE, DK, FR, GB, IT, NL, SE)

1. A device for providing packs of cigarettes or other tobacco products of different types to a plurality of cash desks (1) in a supermarket, which device comprises a central storage space (3) for storing said packs, means (2) displayed at said cash desks (1) for making a selection amongst said types of packs and means, comprising a transport system (4), for supplying a pack of the selected type from said central storage space to said cash desks, characterized in that said central storage space is arranged outside the area of the cash desks and in that said supply means comprise intermediate storage devices (23) disposed at said plurality of cash desks (1) for storing packs of a number of said different types at these cash desks (1) and/or comprise at least partially a pneumatic transport system, which pneumatic transport system is provided with sensors, at least if it extends entirely to the cash desks (1), for following the packs transported thereby.

2. A device according to claim 1, characterized in that said pneumatic transport system extends from the central storage space (3) to each of the cash desks (1)

3. A device according to claim 1 or 2, characterized in that said supply means are arranged to fill up said intermediate storage devices (23) when said transport system (4) is supplying packs at a flow rate smaller than a predetermined flow rate.

4. A device according to any one of the claims 1 to 3, characterized in that said intermediate storage devices (23) are arranged to display the packs stored therein.

5. A device according to any one of the claims 1 to 4, characterized in that said selection means (2) are displayed at said plurality of cash desks (1) and said supply means (4) are arranged to supply a pack of the selected type to the cash desk (1) where the selection was made.

6. A device according to any one of the claims 1 to 5, characterized in that said pneumatic transport system (4) comprises tubes (14) for conveying said packs pneumatically by means of air blown through said tubes, these tubes (14) comprising preferably inwardly directed longitudinal projections (16) to maintain the transported packs (13) a predetermined distance from the inner wall of said tubes (14).

7. A device according to claim 6, characterized in that said transport system (4) comprises sensors disposed along said tubes (14) for following the packs transported by this transport system (4).

8. A device according to any one of the claims 1 to 7, characterized in that said packs are provided with an automatically readable code, indicating said type of packs, and said transport system (4) connects said plurality of cash desks (1) in series and comprises code readers (18) each disposed upstream one of said cash desks (1) and means for actuating ejecting means (19) disposed at the cash desk (1) where the selection was made upon detection by the code reader (18) disposed upstream this latter cash desk of a pack of the selected type.

9. A device according to any one of the claims 1 to 8, characterized in that said transport system (4) comprises modular elements for extending this transport system from one of said plurality of cash desks (1) to the subsequent cash desk (1), said modular elements comprising at least one conveyor belt (17) for conveying said packs along said cask desks, and said transport system (4) preferably comprises tubes (14) for conveying said packs pneumatically from said central storage space (3) to the first one of said conveyor belts (17).

10. A device according to any one of the claims 1 to 9, characterized in that it comprises means for automatically registering the supply of a pack to a cash desk (1) and for charging it to the client.

11. A device according to claim 10, characterized in that said registering means are provided for automatically registering the supply of said pack onto a cash register of the cash desk (1) to which the pack is supplied.

## Patentansprüche (Patentansprüche für folgende(n) Vertragsstaat(en): AT, CH, ES, GR, IE, LI, LU, MC, PT)

1. Vorrichtung zur Bereitstellung von Zigarettenpackungen oder anderen Tabakprodukten unterschiedlicher Art an einer Vielzahl von Kassentischen (1) in einem Supermarkt, mit einem zentralen Lagerraum (3) zur Lagerung der Packungen, Mittel (2) ausgestellt auf dem Kassentisch, um eine Auswahl unter den Packungsarten zu treffen und Mittel, die ein Transportsystem (4) zur Zuführung einer Packung der ausgewählten Art aus dem zentralen Lagerraum zu dem Kassentisch umfassen,
dadurch gekennzeichnet,
daß der genannte zentrale Lagerraum außerhalb des Bereiches der Kassentische angeordnet ist und dadurch, daß die genannten Zuführmittel wenigstens bereichsweise ein pneumatisches Transportsystem umfassen und/oder Zwischenlager (23), angeordnet an der Vielzahl der Kassentische (1), zur Lagerung einer Anzahl von Packungen unterschiedlicher Art an den Kassentischen (1).

2. Vorrichtung nach Anspruch 1,
dadurch gekennzeichnet,
daß das pneumatische Transportsystem von dem zentralen Lagerraum (3) zu jedem Kassentisch (1) führt.

3. Vorrichtung nach Anspruch 1 oder 2,
dadurch gekennzeichnet,
daß die Zuführmittel so ausgebildet sind, daß sie die genannten Zwischenlagermittel (23) füllen, wenn das Transportsystem (4) Packungen in einer Durchflußrate, die kleiner ist als eine vorbestimmte Durchflußrate, liefert.

4. Vorrichtung nach einem der Ansprüche 1 bis 3,
dadurch gekennzeichnet,
daß die zwischengeschalteten Lagermittel (23) eingerichtet sind, um die darin gelagerten Packungen zur Schau zu stellen.

5. Vorrichtung nach einem der vorangehenden Ansprüche 1 bis 4,
dadurch gekennzeichnet,
daß die genannten Wahlmittel (2) an der genannten Vielzahl von Kassentischen (1) angeordnet sind und die Zuführmittel (4) so ausgerichtet sind, daß sie eine Packung der gewählten Art zu demjenigen Kassentisch (1) liefern, an dem die Auswahl getroffen wurde.

6. Vorrichtung nach einem der vorangehenden Ansprüche 1 bis 5,
dadurch gekennzeichnet,
daß das genannte pneumatische Transportsystem (4) Rohrleitungen (14) aufweist zur pneumatischen Förderung der Packungen mit Hilfe von Druckluft durch diese Leitungen, wobei diese Leitungen (14) vorzugsweise nach innen gerichtete Längsvorsprünge (16) aufweisen, um dafür zu sorgen, daß die transportierten Packungen (13) einen vorbestimmten Abstand von der inneren Wand der Leitungen (14) einhalten.

7. Vorrichtung nach Anspruch 6,
dadurch gekennzeichnet,
daß das Transportsystem (4) Sensoren, die entlang der Leitungen (14) angeordnet sind, umfaßt, um den durch das Transportsystem geförderten Packungen zu folgen.

8. Vorrichtung nach einem der Ansprüche 1 bis 7,
dadurch gekennzeichnet,
daß die Packungen mit einem automatisch lesbaren Code ausgerüstet sind zur Kennzeichnung des Typs der Packungen und wobei das genannte Transportsystem (4) eine Vielzahl von Kassentischen (1) in Reihe verbindet und Code-Leser (13) umfaßt, jeder angeordnet stromaufwärts jedes Kassentisches (1), und Mittel zur Auslösung von Auswurfmitteln (19), angeordnet an demjenigen Kassentisch (1), bei dem die Auswahl aufgrund der Detektion einer Packung der gewählten Art durch den Code-Leser (18), angeordnet stromaufwärts dieses letzteren Kassentisches, getroffen wurde.

9. Vorrichtung nach einem der Ansprüche 1 bis 8,
dadurch gekennzeichnet,
daß das Transportsystem (4) modulare Elemente aufweist zur Vergrößerung dieses Transportsystemes von einem der mehreren Kassentische (1) zu dem anschließenden Kassentisch (1), wobei diese modularen Elemente wenigstens ein Transportband (17) zum Transportieren der Packungen entlang den Kassentischen aufweist und wobei das Transportsystem (4) vorzugsweise Rohre (14) zum Transport der Packungen pneumatisch von dem genannten Zentrallagerraum (3) zu dem ersten der genannten Transportbänder (17) aufweist.

10. Vorrichtung nach einem der Anspruche 1 bis 9,
dadurch gekennzeichnet,
daß sie Mittel zur automatischen Registrierung der Lieferung einer Packung zu einem Kassentisch (4) und zur Inrechnungstellung gegenüber dem Kunden aufweist.

11. Vorrichtung nach Anspruch 10,
dadurch gekennzeichnet,
daß die Registrierungsmittel eingerichtet sind zur automatischen Registrierung der Lieferung einer Packung auf einem Kassenregister des Kassentisches (1), zu der die Packung geliefert wurde.

## Patentansprüche (Patentansprüche für folgende(n) Vertragsstaat(en): BE, DE, DK, FR, GB, IT, NL, SE)

1. Vorrichtung zur Bereitstellung von Zigarettenpackungen oder anderen Tabakprodukten unterschiedlicher Art an einer Vielzahl von Kassentischen (1) in einem Supermarkt, mit einem zentralen Lagerraum (3) zur Lagerung der Packungen, Mittel (2) ausgestellt auf dem Kassentisch, um eine Auswahl unter den Packungsarten zu treffen und Mittel, die ein Transportsystem (4) zur Zuführung einer Packung der ausgewählten Art aus dem zentralen Lagerraum zu dem Kassentisch umfassen,
dadurch gekennzeichnet,
daß der zentrale Lagerraum außerhalb des Bereiches der Kassentische angeordnet ist und dadurch, daß die genannten Zuführmittel Zwischenlager (23) umfassen, angeordnet an der Vielzahl der Kassentische (1) zur Lagerung einer Anzahl von Packungen unterschiedlicher Art an den Kassentischen (1) und/oder mit einem wenigstens bereichsweise pneumatischen Transportsystem, wobei das pneumatische Transportsystem mit Sensoren ausgerüstet ist, wenigstens wenn es zu einem Kassentisch (1) führt, zum Folgen der Packungen, die damit transportiert werden.

2. Vorrichtung nach Anspruch 1,
dadurch gekennzeichnet,
daß das pneumatische Transportsystem von dem zentralen Lagerraum (3) zu jedem Kassentisch (1) führt.

3. Vorrichtung nach Anspruch 1 oder 2,
dadurch gekennzeichnet,
daß die Zuführmittel so ausgebildet sind, daß sie die genannten Zwischenlagermittel (23) füllen, wenn das Transportsystem (4) Packungen in einer Durchflußrate, die kleiner ist als eine vorbestimmte Durchflußrate, liefert.

4. Vorrichtung nach einem der Ansprüche 1 bis 3,
dadurch gekennzeichnet,
daß die zwischengeschalteten Lagermittel (23) eingerichtet sind, um die darin gelagerten Packungen zur Schau zu stellen.

5. Vorrichtung nach einem der vorangehenden Ansprüche 1 bis 4,
dadurch gekennzeichnet,
daß die genannten Wahlmittel (2) an der genannten Vielzahl von Kassentischen (1) angeordnet sind und die Zuführmittel (4) so ausgerichtet sind, daß sie eine Packung der gewählten Art zu demjenigen Kassentisch (1) liefern, an dem die Auswahl getroffen wurde.

6. Vorrichtung nach einem der vorangehenden Ansprüche 1 bis 5,
dadurch gekennzeichnet,
daß das genannte pneumatische Transportsystem (4) Rohrleitungen (14) aufweist zur pneumatischen Förderung der Packungen mit Hilfe von Druckluft durch diese Leitungen, wobei diese Leitungen (14) vorzugsweise nach innen gerichtete Längsvorsprünge (16) aufweisen, um dafür zu sorgen, daß die transportierten Packungen (13) einen vorbestimmten Abstand von der inneren Wand der Leitungen (14) einhalten.

7. Vorrichtung nach Anspruch 6,
dadurch gekennzeichnet,
daß das Transportsystem (4) Sensoren, die entlang der Leitungen (14) angeordnet sind, umfaßt, um den durch das Transportsystem geförderten Packungen zu folgen.

8. Vorrichtung nach einem der Ansprüche 1 bis 7,
dadurch gekennzeichnet,
daß die Packungen mit einem automatisch lesbaren Code ausgerüstet sind zur Kennzeichnung des Typs der Packungen und wobei das genannte Transportsystem (4) eine Vielzahl von Kassentischen (1) in Reihe verbindet und Code-Leser (13) umfaßt, jeder angeordnet stromaufwärts jedes Kassentisches (1), und Mittel zur Auslösung von Auswurfmitteln (19), angeordnet an demjenigen Kassentisch (1), bei dem die Auswahl aufgrund der Detektion einer Packung der gewählten Art durch den Code-Leser (18), angeordnet stromaufwärts dieses letzteren Kassentisches, getroffen wurde.

9. Vorrichtung nach einem der Ansprüche 1 bis 8,
dadurch gekennzeichnet,
daß das Transportsystem (4) modulare Elemente aufweist zur Vergrößerung dieses Transportsystemes von einem der mehreren Kassentische (1) zu dem anschließenden Kassentisch (1), wobei diese modularen Elemente wenigstens ein Transportband (17) zum Transportieren der Packungen entlang den Kassentischen aufweist und wobei das Transportsystem (4) vorzugsweise Rohre (14) zum Transport der Packungen pneumatisch von dem genannten Zentrallagerraum (3) zu dem ersten der genannten Transportbänder (17) aufweist.

10. Vorrichtung nach einem der Ansprüche 1 bis 9,
dadurch gekennzeichnet,
daß sie Mittel zur automatischen Registrierung der Lieferung einer Packung zu einem Kassentisch (4) und zur Inrechnungstellung gegenüber dem Kunden aufweist.

11. Vorrichtung nach Anspruch 10,
dadurch gekennzeichnet,
daß die Registrierungsmittel eingerichtet sind zur automatischen Registrierung der Lieferung einer Packung auf einem Kassenregister des Kassentisches (1), zu der die Packung geliefert wurde.

## Revendications (Revendications pour l'(les) Etat(s) contractant(s) suivant(s): AT, CH, ES, GR, IE, LI, LU, MC, PT)

1. Dispositif pour l'approvisionnement de paquets de cigarettes ou d'autres produits de tabac de différents types à une série de caisses (1) dans un supermarché, lequel dispositif comprend un espace de stockage central (3) pour stocker lesdits paquets, un moyen (2) visualisé auxdites caisses (1) pour réaliser une sélection parmi ces types de paquets et un moyen, comprenant un système de transport (4), pour amener un paquet du type sélectionné de l'espace de stockage central aux caisses, caractérisé en ce que ledit espace de stockage central est agencé à l'extérieur de l'aire des caisses et en ce que ledit moyen d'alimentation comprend au moins partiellement un système de transport pneumatique et/ou comprend des dispositifs de stockage intermédiaires (23) disposés à l'endroit de la série de caisses (1) pour stocker des paquets d'un certain nombre de ces différents types à ces caisses (1).

2. Dispositif suivant la revendication 1, caractérisé en ce que le système de transport pneumatique susdit s'étend de l'espace de stockage central (3) à chacune des caisses (1).

3. Dispositif suivant l'une ou l'autre des revendications 1 et 2, caractérisé en ce que le moyen d'alimentation susdit est agencé pour remplir les dispositifs de stockage intermédiaires (23) lorsque le système de transport (4) amène les paquets à un débit plus faible qu'un débit prédéterminé.

4. Dispositif suivant l'une quelconque des revendications 1 à 3, caractérisé en ce que les dispositifs de stockage intermédiaires (23) sont agencés pour visualiser les paquets stockés dans ceux-ci.

5. Dispositif suivant l'une quelconque des revendications 1 à 4, caractérisé en ce que le moyen de sélection (2) est visualisé à la série de caisses (1) et le moyen d'alimentation (4) est agencé pour amener un paquet du type sélectionné à la caisse (1) où la sélection a été faite.

6. Dispositif suivant l'une quelconque des revendications 1 à 5, caractérisé en ce que le système de transport pneumatique (4) comprend des tubes (14) pour véhiculer les paquets pneumatiquement au moyen d'air insufflé par lesdits tubes, ces tubes (14) comprenant avantageusement des projections longitudinales dirigées intérieurement (16) pour maintenir les paquets transportés (13) à une distance prédéterminée de la paroi intérieure de ces tubes (14).

7. Dispositif suivant la revendication 6, caractérisé en ce que le système de transport (4) comprend des détecteurs disposés le long de ces tubes (14) pour suivre les paquets transportés par ce système de transport (4).

8. Dispositif suivant l'une quelconque des revendications 1 à 7, caractérisé en ce que lesdits paquets sont pourvus d'un code lisible automatiquement, indiquant le type de paquets et le système de transport (4) relie la série de caisses (1) en série et comprend des lecteurs de code (18) agencés chacun en amont d'une des caisses (1) et un moyen pour actionner un moyen d'éjection (19) agencé à la caisse (1) où la sélection a été faite par détection par le lecteur de code (18) agencé en amont de cette dernière caisse d'un paquet du type sélectionné.

9. Dispositif suivant l'une quelconque des revendications 1 à 8, caractérisé en ce que le système de transport (4) comprend des éléments modulaires pour étendre ce système de transport d'une caisse de la série de caisses (1) à la caisse suivante (1), lesdits éléments modulaires comprenant au moins une courroie transporteuse (17) pour véhiculer les paquets le long des caisses et le système de transport (4) comprend avantageusement des tubes (14) pour véhiculer les paquets pneumatiquement de l'espace de stockage central (3) à la première des courroies transporteuses (17).

10. Dispositif suivant l'une quelconque des revendications 1 à 9, caractérisé en ce qu'il comprend un moyen pour enregistrer automatiquement l'amenée d'un paquet à une caisse (1) et pour le compter au client.

11. Dispositif suivant la revendication 10, caractérisé en ce que le moyen d'enregistrement est prévu pour enregistrer automatiquement l'amenée du paquet sur une caisse enregistreuse de la caisse (1) à laquelle le paquet est amené.

## Revendications (Revendications pour l'(les) Etat(s) contractant(s) suivant(s): BE, DE, DK, FR, GB, IT, NL, SE)

1. Dispositif pour l'approvisionnement de paquets de cigarettes ou d'autres produits de tabac de différents types à une série de caisses (1) dans un supermarché, lequel dispositif comprend un espace de stockage central (3) pour stocker lesdits paquets, un moyen (2) visualisé auxdites caisses (1) pour réaliser une sélection parmi ces types de paquets et un moyen, comprenant un système de transport (4), pour amener un paquet du type sélectionné de l'espace de stockage central aux caisses, caractérisé en ce que ledit espace de stockage central est agencé à l'extérieur de l'aire des caisses et en ce que ledit moyen d'alimentation comprend des dispositifs de stockage intermédiaires (23) disposés à la série de caisses (1) pour stocker les paquets d'un certain nombre de ces différents types à ces caisses (1) et/ou comprend au moins partiellement un système de transport pneumatique, lequel système de transport pneumatique est pourvu de détecteurs, du moins s'il s'étend entièrement jusqu'aux caisses (1), pour suivre les paquets ainsi transportés.

2. Dispositif suivant la revendication 1, caractérisé en ce que le système de transport pneumatique susdit s'étend de l'espace de stockage central (3) à chacune des caisses (1).

3. Dispositif suivant l'une ou l'autre des revendications 1 et 2, caractérisé en ce que le moyen d'alimentation susdit est agencé pour remplir les dispositifs de stockage intermédiaires (23) lorsque le système de transport (4) amène les paquets à un débit plus faible qu'un débit prédéterminé.

4. Dispositif suivant l'une quelconque des revendications 1 à 3, caractérisé en ce que les dispositifs de stockage intermédiaires (23) sont agencés pour visualiser les paquets stockés dans ceux-ci.

5. Dispositif suivant l'une quelconque des revendications 1 à 4, caractérisé en ce que le moyen de sélection (2) est visualisé à la série de caisses (1) et le moyen d'alimentation (4) est agencé pour amener un paquet du type sélectionné à la caisse (1) où la sélection a été faite.

6. Dispositif suivant l'une quelconque des revendications 1 à 5, caractérisé en ce que le système de transport pneumatique (4) comprend des tubes (14) pour véhiculer les paquets pneumatiquement au moyen d'air insufflé par lesdits tubes, ces tubes (14) comprenant avantageusement des projections longitudinales dirigées intérieurement (16) pour maintenir les paquets transportés (13) à une distance prédéterminée de la paroi intérieure de ces tubes (14).

7. Dispositif suivant la revendication 6, caractérisé en ce que le système de transport (4) comprend des détecteurs disposés le long de ces tubes (14) pour suivre les paquets transportés par ce système de transport (4).

8. Dispositif suivant l'une quelconque des revendications 1 à 7, caractérisé en ce que lesdits paquets sont pourvus d'un code lisible automatiquement, indiquant le type de paquets et le système de transport (4) relie la série de caisses (1) en série et comprend des lecteurs de code (18) agencés chacun en amont d'une des caisses (1) et un moyen pour actionner un moyen d'éjection (19) agencé à la caisse (1) où la sélection a été faite par détection par le lecteur de code (18) agencé en amont de cette dernière caisse d'un paquet du type sélectionné.

9. Dispositif suivant l'une quelconque des revendications 1 à 8, caractérisé en ce que le système de transport (4) comprend des éléments modulaires pour étendre ce système de transport d'une caisse de la série de caisses (1) à la caisse suivante (1), lesdits éléments modulaires comprenant au moins une courroie transporteuse (17) pour véhiculer les paquets le long des caisses et le système de transport (4) comprend avantageusement des tubes (14) pour véhiculer les paquets pneumatiquement de l'espace de stockage central (3) à la première des courroies transporteuses (17).

10. Dispositif suivant l'une quelconque des revendications 1 à 9, caractérisé en ce qu'il comprend un moyen pour enregistrer automatiquement l'amenée d'un paquet à une caisse (1) et pour le compter au client.

11. Dispositif suivant la revendication 10, caractérisé en ce que le moyen d'enregistrement est prévu pour enregistrer automatiquement l'amenée du paquet sur une caisse enregistreuse de la caisse (1) à laquelle le paquet est amené.
